# EUROPEAN PATENT SPECIFICATION

(11) **EP 1 563 985 B1**
(45) Date of publication and mention of the grant of the patent: **30.09.2015**
(21) Application number: 05101088.2
(22) Date of filing: 14.02.2005
(51) Int. Cl.: B29D 23/00, F16L 11/08, B29C 35/02, B29C 47/02, B29K 21/00, B29K 105/10

(54) **Method of making a flexible PVC hose**
Verfahren zur Herstellung eines biegsamen PVC-Schlauchs
Procédé de fabrication d'un tuyau flexible en PVC

(30) Priority: 17.02.2004 US 545265 P
(43) Date of publication of application: 17.08.2005
(73) Proprietor: Veyance Technologies, Inc., Fairlawn, OH 44333-3023 (US)
(72) Inventor: Neto, Emilio Priore, CEP 03088-070, Sao Paulo SP (BR); Sanches, Luis Roberto Flores, CEP 04122-030, Sao Paulo SP (BR); Da Silva, Antonio Rodrigues, CEPT 05145-902, Pirituba / Sao Paulo SP (BR)
(74) Representative: DREISS Patentanwälte PartG mbB

(56) References cited:
- WO-A-97/03815
- GB-A- 1 384 545
- US-A- 3 684 602
- US-A- 4 371 415
- US-A- 4 668 319

## Description

### Background of the Invention

Flexible poly(vinyl chloride) (i.e., PVC) hoses are made for general use with liquids and gases, such as water and air. Typically, a flexible PVC hose has a three-layer construction with a PVC inner tube, a textile reinforcement, and a PVC cover. In order to improve the adhesion of the PVC layers to the reinforcement, adhesive compositions are sometimes applied to the reinforcement. However, there remains a need to improve the adhesion and burst strength of flexible PVC hoses.

From US- A - 4 668 319 a method for making a hose that involves extruding a PVC tube, applying a textile reinforcement over the tube, and extruding a second PVC compound over the textile reinforcement is known.

From WO-A-97/03815 a process for the production iof a hose is known where all components of the hose may be applied cold, by which is meant a temperature below 50°C, optionally below 30°C.

### Summary of the Invention

The present invention is directed to a method of making a flexible hose according to claim 1. Dependent claims refer to preferred embodiments of the invention.

### Brief Description of the Drawings

Figure 1 is a side view of a hose of the present invention; and
Figure 2 is a schematic representation of the method of the present invention.

### Description of the Preferred Embodiment

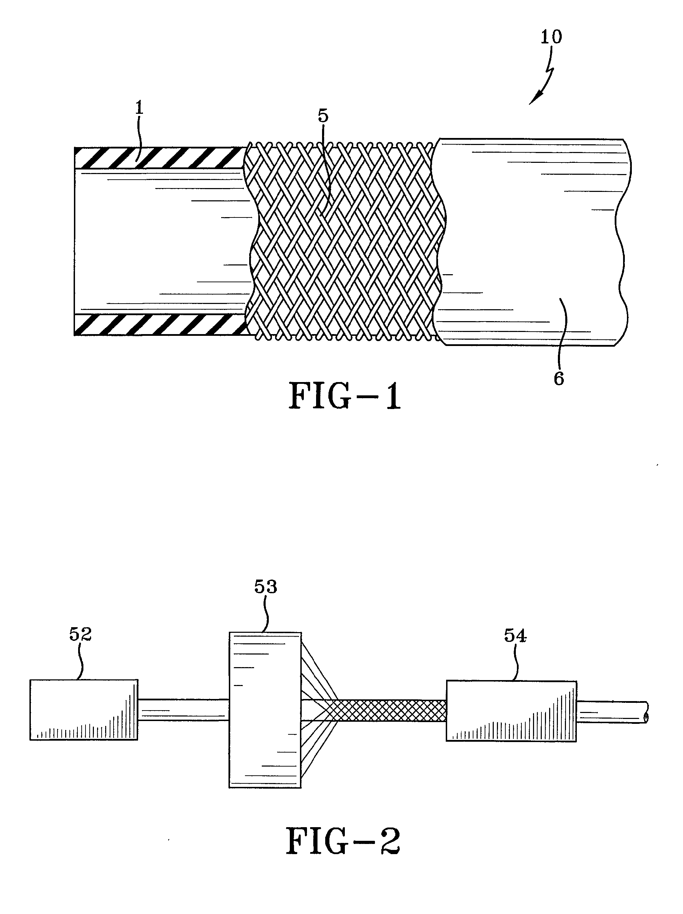

Figure 1 shows a hose 10 made according to the methods of the present invention. Hose 10 includes an inner tube 1 formed from a flexible poly(vinyl chloride) compound. Reinforcement layer 5 overlays tube 1 and is formed from a conventional textile yarn. Cover layer 6 overlays reinforcement layer 5 and is formed from a flexible poly(vinyl chloride) compound.

Figure 2 is a simplified schematic representation of the method of manufacturing flexible hose 10. A solid mandrel may be employed in the manufacture of this hose. An unsupported elastomeric tube member 1 is produced using conventional tube making equipment such as an extruder 52. Tube member 1 may optionally have positive pressure applied inside to assist in maintaining its circular cross-section. Figure 2 shows the elastomeric tube 1 being fed directly to a braider 53 for application of the textile reinforcement 5. It should be noted that the process for manufacturing the elastomeric tube may be such that it is desirable for the elastomeric tube to be produced in a separate step and later fed into the braider 53. Conventional braider equipment may be utilized.

Once the desired textile reinforcement has been applied, an elastomeric cover 6 is applied over the braided sleeves by cover applicator 54. Any conventional process for application of cover layers to a hose may be utilized with the most common method being the use of a cross-head extruder. The composite hose 10 exits from the cover applicator 54 and proceeds to the heating process. The heating process may be any conventionally known method of curing or vulcanizing hose wherein heat and pressure are applied. One curing method in which an additional step is required is a fabric-wrap method in which fabric is spiraled over the uncured hose composite for the purpose of applying external pressure to the composite prior to the introduction of the uncured hose composite to the high temperature curing conditions. In a more preferred embodiment, the hose 10 is forced over a rigid mandrel and processed in a steam autoclave at elevated temperature and pressure. Typically, a long length of hose 10, for example 30 m (100 feet), is forced over a rigid steel mandrel and batch processed in a steam autoclave. A suitable autoclave is described in US-A-4,228,134.

The temperature of the heating process may range from 130°C to 160°C. Alternatively, the temperature may range from 135° C to 155°C. The pressure of the heating process may range from 308,000 Pa (30 psig) to 584,000 Pa (70 psig). Alternatively, the pressure may range from 377,000 Pa (40 psig) to 515,000 Pa (60 psig). The processing time for the application of heat and pressure to the hose may range from 5 to 40 minutes. Alternatively, the time may range from 10 to 30 minutes.

Common ingredients which are added to the PVC compound for use in the hose tube and cover include lubricants (0.35 phr to 0.45 phr), stabilizers (3 to 4 phr), plasticizers (50 to 70 phr), and pigments (0.0001 to 0.001 phr). The above levels of conventional ingredients may be varied, depending on the hose, so long as the specific gravity criteria is observed. For example, the amount of pigment may be increased depending on the desired color if a clear hose is not desired. To obtain a lower weight hose, the PVC compound may include blowing agents to obtain a foamed PVC.

The textile reinforcement may be any suitable reinforcing yarn, such as polyester, nylon, aramid, rayon, glass, and the like. In one embodiment, the reinforcing yarn is polyester. The reinforcement may be applied by one of the methods as are known in the art, including spiraling, braiding, and the like. In one embodiment, the textile yarn is braided onto the tube.

The invention is further illustrated by the following example.

### EXAMPLE

Four PVC hoses samples were prepared that had the design of Figure 1. Each hose had a PVC tube, polyester reinforcement layer, and PVC cover layer. Samples 1 and 3 were control samples, and Samples 2 and 4 represented the present invention. The hoses were produced following the procedure as illustrated in Figure 2. For Samples 2 and 4, each hose was mounted on a steel mandrel and wrapped in a helical fabric wrap, followed by processing in an autoclave at 146° C and 473,600 Pa (54 psig) for 20 minutes. Control hose (Samples 1 and 3) and hose processed according to the invention (Samples 2 and 4) was tested for adhesion between the PVC cover and textile reinforcement, adhesion between the textile reinforcement and the PVC tube, and for burst strength. Burst strength adhesive strength were measured following ASTM D-380. Results are given in Table 1.

**Table 1**

| | Control Sample 1 | Sample 2 | Control Sample 3 | Sample 4 |
|---|---|---|---|---|
| Tube ID | 1,9 cm (0.75 in) | 1,9 cm (0.75 in) | 2,5 cm (1 in) | 2,5 cm (1 in) |
| Adhesive Strength | | | | |
| Cover/Yarn, | 1,41 Nm (12.5 lb/in) | 9,94 Nm (17.2 lb/in) | 1,50 Nm (13.3 lb/in) | 3,03 Nm (26.8 lb/in) |
| Yarn/Tube, lb./in. | 0,93 Nm (8.2 lb/in) | 3,03 Nm (26.8 lb/in) | 1,57 Nm (13.9 lb/in) | 2,50 Nm (22.1 lb/in) |
| Burst | 5,52 x 10⁶ Pa (800 psi) | 6,89 x 10⁶ Pa (1000 psi) | 8,27 x 10⁶ Pa (1200 psi) | 8,96 x 10⁶ Pa (1300 psi) |

As is evident from the data of Table 1, flexible PVC hoses made according to the methods of the present invention show significantly improved adhesive strength and burst strength as compared with flexible PVC hoses made without the application of heat and pressure. For example, the burst strengths in Table 1 show an improvement ranging from 8 to 25 percent greater for hoses processed with heat and pressure (Samples 2 and 4), as compare with the control hoses that were not processed with heat and pressure (Samples 1 and 3). More generally, hoses made according to the present invention may have burst strengths of from 5 to 50 percent greater than hoses made without heat and pressure. The adhesive strengths in Table 1 show an improvement ranging from 38 to 200 percent greater for hoses processed with heat and pressure (Samples 2 and 4), as compare with the control hoses that were not processed with heat and pressure (Samples 1 and 3). More generally, hoses made according to the present invention may have adhesive strengths of from 25 to 250 percent greater than hoses made without heat and pressure.

While not wishing to be bound by any particular theory, it is believed that the application of heat and pressure to obtain the flexible hose of the present invention results in a better impregnation of the textile reinforcement layer with the thermoplastic PVC from the tube and cover layers. It is believed that during the application of heat and pressure, the PVC softens and flows between the textile yarns, to obtain a mechanical interlocking as well as a commingling of the polymer from the tube and cover.

## Claims

1. A method of making a flexible hose (10), comprising the steps of extruding a first poly(vinyl chloride) compound to form a tube (1), the tube (1) having an inner cylindrical cavity coextensive with the tube (1);
a) applying a textile reinforcement (5) over the tube (1);
b) extruding a second poly(vinyl chloride) compound over the textile reinforcement (5) to form a cover layer (6), said tube (1), reinforcement (5) and cover layer (6) defining a hose composite; **characterized in that** said method further comprises:
c) inserting a rigid mandrel into the inner cylindrical cavity;
d) wrapping a fabric wrap around the outside of the cover layer (6) of the hose composite; and
e) processing the wrapped hose composite at a temperature in a range of 130 to 160° C and at a pressure of 308,000 Pa (30 psig) to 584,000 Pa (70 psig) for a time ranging from 5 to 40 minutes.

2. The method of claim 1, wherein the first and second poly(vinyl chloride) compounds are of the same recipe.

3. The method of claim 1 or 2, wherein the textile reinforcement (5) is selected from the group consisting of polyester, nylon, aramid, rayon, and glass.

4. The method of claim 3, wherein the textile reinforcement (5) is polyester.

5. The method of at least one of the previous claims, wherein the hose (10) is processed as a temperature of from 135°C to 155°C.

6. The method of at least one of the previous claims, wherein the hose (10) is processed at a pressure of from 377,000 Pa (40 psig) to 515,000 Pa (60 psig).

7. The method of at least one of the previous claims, wherein the hose (10) is processed for a time of from 10 minutes to 30 minutes.

8. The method of at least one of the previous claims, wherein the processing of step e) occurs in a steam autoclave.

## Patentansprüche

1. Verfahren zum Herstellen eines flexiblen Schlauchs (10), beinhaltend die Schritte des Extrudierens einer ersten Poly-(Vinylchlorid)Verbindung, um ein Rohr (1) zu bilden, wobei das Rohr (1) einen inneren zylindrischen, mit dem Rohr (1) ausdehnungsgleichen Hohlraum besitzt;
a) Aufbringen einer Textilverstärkung (5) über das Rohr (1) ;
b) Extrudieren einer zweiten Poly-(Vinylchlorid)Verbindung über die Textilverstärkung (5), um eine Deckschicht (6) zu bilden, wobei das Rohr (1), die Verstärkung (5) und die Deckschicht (6) einen Schlauchverbund festlegen;
**dadurch gekennzeichnet, dass** das Verfahren ferner beinhaltet:
c) Einsetzen eines starren Dorns in den inneren zylindrischen Hohlraum;
d) Wickeln einer Gewebeumhüllung um die Außenseite der Deckschicht (6) des Schlauchverbundes; und
e) Verarbeiten des umwickelten Schlauchverbundes bei einer Temperatur in einem Bereich von 130 bis 160 °C und bei einem Druck von 308.000 Pa (30 psig) bis 584.000 Pa (70 psig) für eine Dauer, die von 5 bis 40 Minuten reicht.

2. Verfahren nach Anspruch 1, wobei die erste und die zweite Poly-(Vinylchlorid)Verbindung auf dieselbe Rezeptur zurückgehen.

3. Verfahren nach Anspruch 1 oder 2, wobei die Textilverstärkung (5) aus der Gruppe, die aus Polyester, Nylon, Aramid, Rayon und Glas besteht, ausgewählt wird.

4. Verfahren nach Anspruch 3, wobei die Textilverstärkung (5) Polyester ist.

5. Verfahren nach mindestens einem der vorangegangenen Ansprüche, wobei der Schlauch (10) bei einer Temperatur von 135 °C bis 155 °C verarbeitet wird.

6. Verfahren nach mindestens einem der vorangegangenen Ansprüche, wobei der Schlauch (10) bei einem Druck von 377.000 Pa (40 psig) bis 515.000 Pa (60 psig) verarbeitet wird.

7. Verfahren nach mindestens einem der vorangegangenen Ansprüche, wobei der Schlauch (10) für eine Dauer von 10 Minuten bis 30 Minuten verarbeitet wird.

8. Verfahren nach mindestens einem der vorangegangenen Ansprüche, wobei die Verarbeitung des Schrittes e) in einem Dampfautoklav stattfindet.

## Revendications

1. Procédé de fabrication d'un tuyau flexible (10), comprenant les étapes consistant à extruder un premier composé de chlorure de polyvinyle pour former un tube (1), le tube (1) ayant une cavité cylindrique intérieure de même extension que le tube (1) ;
a) appliquer un renfort textile (5) sur le tube (1) ;
b) extruder un second composé de chlorure de polyvinyle par-dessus le renfort textile (5) pour former une couche de couverture (6), ledit tube (1), ledit renfort (5) et ladite couche de couverture (6) définissant un tuyau composite ;
**caractérisé en ce que** ledit procédé comprend en outre les étapes consistant à :
c) insérer un mandrin rigide dans la cavité cylindrique intérieure ;
d) envelopper une enveloppe en tissu autour de l'extérieur de la couche de couverture (6) du tuyau composite ; et
e) traiter le tuyau composite enveloppé à une température dans une plage de 130 à 160°C et sous une pression de 308 000 Pa (30 psig) à 584 000 Pa (70 psig) pendant un temps allant de 5 à 40 minutes.

2. Procédé selon la revendication 1, dans lequel le premier et le second composé de chlorure de polyvinyle ont la même composition.

3. Procédé selon la revendication 1 ou 2, dans lequel le renfort textile (5) est sélectionné parmi le groupe comprenant polyester, nylon, aramide, rayonne, et verre.

4. Procédé selon la revendication 3, dans lequel le renfort textile (5) est en polyester.

5. Procédé selon l'une au moins des revendications précédentes, dans lequel le tuyau (10) est traité à une température de 135°C à 155°C.

6. Procédé selon l'une au moins des revendications précédentes, dans lequel le tuyau (10) est traité à une pression de 377 000 Pa (40 psig) à 515 000 Pa (60 psig).

7. Procédé selon l'une au moins des revendications précédentes, dans lequel le tuyau (10) est traité pendant un temps de 10 minutes à 30 minutes.

8. Procédé selon l'une au moins des revendications précédentes, dans lequel le traitement de l'étape e) a lieu dans une autoclave à vapeur.
